# EUROPEAN PATENT APPLICATION

(11) **EP 3 998 185 A1**
(43) Date of publication of application: **18.05.2022**
(21) Application number: 20836115.4
(22) Date of filing: 19.05.2020
(51) Int. Cl.: B62D 1/04, B62D 3/02

(54) **DIRECTION ADJUSTING DEVICE AND APPLICATION THEREOF**

(30) Priority: 09.07.2019 CN 201910614647; 09.07.2019 CN 201921070396 U
(71) Applicant: FJ Dynamics Technology Co., Ltd, Xiangyang, Hubei 441100 (CN)
(72) Inventor: LUO, Sheng, Hubei 441100 (CN); YANG, Jun, Hubei 441100 (CN); WU, Di, Hubei 441100 (CN); YAO, Yuan, Hubei 441100 (CN)
(74) Representative: Zaboliene, Reda
(86) International application number: PCT/CN2020/090933
(87) International publication number: WO 2021/004160

(57) **Abstract**

A direction adjusting device for mounting to a steering system of a driving body includes a driving element and a linkage element. The driving element includes a fitting housing and a driving main body, the fitting housing has an accommodation space, the driving main body has a transmission channel, the driving main body is installed in the accommodation space of the fitting housing, and the transmission channel of the driving main body communicates with the accommodation space of the fitting housing. The linkage element is installed in the transmission channel, the driving main body is capable of for driving the linkage element to rotate, and the linkage element is installed on the steering system of the driving main body.

## Description

### FIELD

The subject matter relates to the mechanical field, and more particularly, to a direction adjusting device and application thereof.

### BACKGROUND

In recent years, agricultural machinery and engineering vehicles are widely used in agricultural production. Due to the poor working environment and monotonous work content of the agricultural machinery and the engineering vehicles, there is an increasing demand for driverless agricultural machinery and engineering vehicles. A steering wheel is one of the important devices to adjust a direction of travel of automatic agricultural machinery or engineering vehicles.

At present, most of the existing agricultural machinery, engineering vehicles, or other types of driving device on the market usually have a steering wheel installed when leaving the factory. Generally, the types of steering wheels of different types of driving device are different, and there will be great differences in structures. Skilled technicians are necessary for complete disassembly and installation, which is not conducive to the subsequent maintenance and replacement and increases the maintenance cost of users.

In addition, an existing steering wheel suitable for automatic driving device has many parts and is not compact enough, resulting in complex assembly process. It not only requires professional technicians to guide and cooperate with the installation on site, but also takes a lot of time to complete the assembly. In other words, the assembly of the existing steering wheel is difficult and the assembly efficiency is low, which also increases the labor cost of assembly.

Therefore, it is urgent to modify the steering wheel for automatic driving device, so as to simplify the assembly process of steering wheel and reduce the assembly difficulty.

### SUMMARY

The present disclosure provides a direction adjusting device and application thereof, the direction adjusting device is suitable for adjusting a direction of travel of a driving body of an automatic driving device. The structure of the direction adjusting device is modified, so that the direction adjusting device can be rapid assembly with the driving body, so as to improve the assembly efficiency and save assembly time.

The present disclosure provides a direction adjusting device and application thereof, the structure of the direction adjusting device is simple and compact, and the requirement for the proficiency of the operator is low, which is conducive to reducing the assembly cost and maintenance cost of the automatic driving device.

The present disclosure provides a direction adjusting device and application thereof, the direction adjusting device comprises a driving element, the driving element can turn the driving body according to a steering command, so as to realize automatic driving.

The present disclosure provides a direction adjusting device and application thereof, the direction adjusting device comprises a linkage element, the linkage element is connected to the driving body and the driving element, and the driving element drives the linkage element to turn the driving body.

The present disclosure provides a direction adjusting device and application thereof, the linkage element is installed in a steering system of the driving body by a spline coupling, which is conducive to the direction adjusting device to withstand a high torque, so as to improve the stability and reliability of the direction adjusting device.

The present disclosure provides a direction adjusting device and application thereof, the direction adjusting device comprises a fitting bracket, the fitting bracket is connected to the driving element and the steering system of the driving body, the fitting bracket is held between the driving element and the steering system. When the automatic driving device is driven automatically, the fitting bracket serves as a fixed support point of the driving element and bears the reaction torque of the driving element during automatic steering.

The present disclosure provides a direction adjusting device and application thereof, the fitting position of the fitting bracket of the direction adjusting device installed on the driving element is selectable, thereby improving the flexibility and applicability of the direction adjusting device.

The present disclosure provides a direction adjusting device and application thereof, the direction adjusting device comprises an operating element, the operating element is installed on the driving element, and the driving element can rotate with the operating element, so that the driving body of the automatic driving device can also be controlled by manual operation, so as to improve the flexibility and applicability of the automatic driving device.

According to one aspect of the present disclosure, the present disclosure provides a direction adjusting device which can be installed on a steering system of a driving body. The direction adjusting device comprises:

a driving element, where the driving element comprises a fitting housing and a driving main body, the fitting housing has an accommodation space, the driving main body has a transmission channel, the driving main body is installed in the accommodation space of the fitting housing, and the transmission channel of the driving main body communicates with the accommodation space of the fitting housing; and
a linkage element, where the linkage element is installed in the transmission channel of the driving main body, the driving main body can rotate the linkage element and the linkage element is installed on the steering system of the driving main body.

According to an embodiment of the present disclosure, the linkage element has a transmission chamber and is provided with an internal spline, and the transmission chamber is formed in the internal spline.

According to an embodiment of the present disclosure, the linkage element has a positioning chamber which communicates with the transmission chamber, and an inner wall of the positioning chamber formed by the linkage element is tapered.

According to an embodiment of the present disclosure, the linkage element is installed in the transmission channel of the driving main body by a clearance fit.

According to an embodiment of the present disclosure, the driving main body has a fitting platform, the linkage element comprises a fitting portion and a transmission main body extending from the fitting portion, and the transmission main body of the linkage element is held in the transmission channel of the driving main body in such a way that the fitting portion is installed on the fitting platform of the driving main body.

According to an embodiment of the present disclosure, the linkage element is a splined sleeve.

According to an embodiment of the present disclosure, the direction adjusting device further comprises a fitting bracket, the fitting bracket comprises a connecting frame and a fastening assembly, and the fitting bracket is held between the fitting housing of the driving element and the fastening assembly.

According to an embodiment of the present disclosure, the connecting frame comprises a mounting portion and an extension portion, the extension portion extends downward from the mounting portion, the mounting portion is installed on the fitting housing, and the extension portion is clamped to the fastening assembly.

According to an embodiment of the present disclosure, the direction adjusting device further comprises a plurality of connecting elements, a bottom of the fitting housing is provided with a plurality of fitting holes, the connecting frame is provided with at least one connecting hole, the connecting hole can correspond to any fitting hole, and each connecting element is installed in a fitting hole and a connecting hole.

According to an embodiment of the present disclosure, the extension portion extends downward from a middle of the mounting portion to form a T shaped structure.

According to an embodiment of the present disclosure, the fastening assembly comprises two fasteners and a fastening connector, the two fasteners are opposite to each other, the fastening connector is installed between the two fasteners to form a fastening space and a clamping space between the two fasteners, and the extension portion of the connecting frame is held in the clamping space, the steering system is held in the fastening space.

According to an embodiment of the present disclosure, the fastening connector is movably installed on the fasteners, and distances between the two fasteners and the fitting housing is adjustable.

According to an embodiment of the present disclosure, the direction adjusting device further comprises an operating element, the operating element is installed at an end of the fitting housing.

According to another aspect of the present disclosure, the present disclosure provides an automatic driving device comprising:
a direction adjusting device, where the direction adjusting device comprises:
a driving element, where the driving element comprises a fitting housing and a driving main body, the fitting housing has an accommodation space, the driving main body has a transmission channel, the driving main body is installed in the accommodation space of the fitting housing, and the transmission channel of the driving main body communicates with the accommodation space of the fitting housing; and
a linkage element, where the linkage element is installed in the transmission channel of the driving body, the driving body can rotate the linkage element, and the linkage element is installed in the steering system of the driving body; and
the driving body, where the driving body comprises a driving main body and the steering system, the steering system is installed on the driving main body, and the steering system can control a direction of travel of the driving main body.

According to an embodiment of the present disclosure, the steering system comprises a steering main body and a steering shaft extending from the steering main body, the steering shaft is provided with an external spline, and the external spline matches with the internal spline of the linkage element of the direction adjusting device.

According to an embodiment of the present disclosure, the automatic driving device further comprises a locking element, the steering shaft is installed on the linkage element in such a way that an end of the steering shaft protrudes from an end of the linkage element, and the locking element is installed on the end of the steering shaft.

According to another aspect of the present disclosure, the present disclosure provides an assembly method of a direction adjusting device, the assembly method comprises the following steps:
(a) holding a linkage element in a transmission channel of a driving main body of a driving element, where the driving body can drive the linkage element to rotate;
(b) mounting a connecting frame of a fitting bracket onto a fitting housing of the driving element; and
(c) connecting an extension portion of the connecting frame to a clamping space of a fastening assembly.

According to an embodiment of the present disclosure, in the above method, a plurality of threaded fitting holes of a fitting portion of the linkage element correspond in position to a plurality of threaded threaded installation holes of a fitting platform of the driving main body, and a connecting element is installed in one of the threaded fitting holes of the linkage element and one of the threaded installation hole of the fitting platform.

According to an embodiment of the present disclosure, in the above method, a linkage main body of the linkage element is held in the transmission channel of the driving main body by a clearance fit.

According to an embodiment of the present disclosure, in the above method, the linkage element is installed on the fitting platform of the driving main body in such a way that the fitting portion is located above the rotating main body.

According to an embodiment of the present disclosure, in the above method, an operating element is installed on the fitting housing of the driving element.

According to an embodiment of the present disclosure, before the step (c), it further comprises a step of installing the linkage element on a steering shaft of a steering system of a driving main body.

According to an embodiment of the present disclosure, in the above method, a transmission portion of the steering shaft and the linkage element are held in a transmission chamber of the linkage element by a spline coupling.

According to an embodiment of the present disclosure, in the above method, a positioning portion of the steering shaft is held in a positioning chamber of the linkage element by a clearance fit.

### BRIEF DESCRIPTION OF THE DRAWINGS

FIG. 1 is an assembled, isometric view of a direction adjusting device according to an embodiment of the present disclosure.
FIG. 2 is a schematic diagram of an assembly process of a direction adjusting device according to an embodiment of the present disclosure.
FIG. 3 is a cross-sectional view of the direction adjusting device according to an embodiment of the present disclosure.
FIG. 4 is an exploded, isometric view of direction adjusting device according to an embodiment of the present disclosure.
FIG. 5 is an exploded, isometric view of direction adjusting device according to an embodiment of the present disclosure.
FIG. 6 is an assembled, isometric view of an automatic driving device according to an embodiment of the present disclosure.

### DETAILED DESCRIPTION

The following description is used to disclose the present disclosure so that those skilled in the art can implement the present disclosure. The preferred embodiments in the following description are only examples, and those skilled in the art can think of other obvious variations. The basic principles of the present disclosure defined in the following description can be applied to other embodiments, modifications, improvements, equivalents, and other technical solutions that do not deviate from the spirit and scope of the present disclosure.

Those skilled in the art should understand that, in the disclosure of the present disclosure, an orientation or a positional relationship indicated by the terms "longitudinal", "lateral", "upper", "lower", "front", "rear", "left", "right", "vertical", "horizontal", "top", "bottom", "inner", "outer", etc. is based on the orientation or the positional relationship shown in the drawings, which is only for the convenience of describing the present disclosure and simplifying the description, rather than indicating or implying that a device or an element must have a specific orientation and must be constructed and operated in a specific orientation, so the above terms should not be understood as a limitation of the present disclosure.

It can be understood that the term "a" should be understood as "at least one" or "one or more", that is, in an embodiment, the number of a kind of element may be one, and in another embodiment, the number of the kind of element can be more than one, and the term "one" cannot be understood as a restriction on the number.

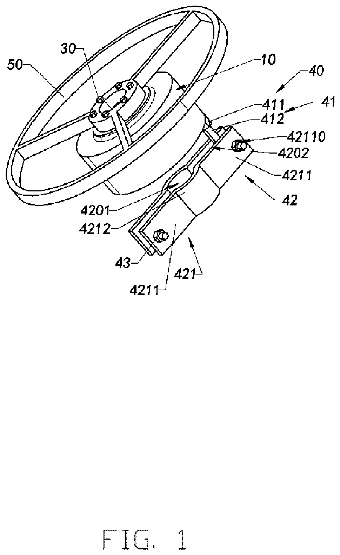

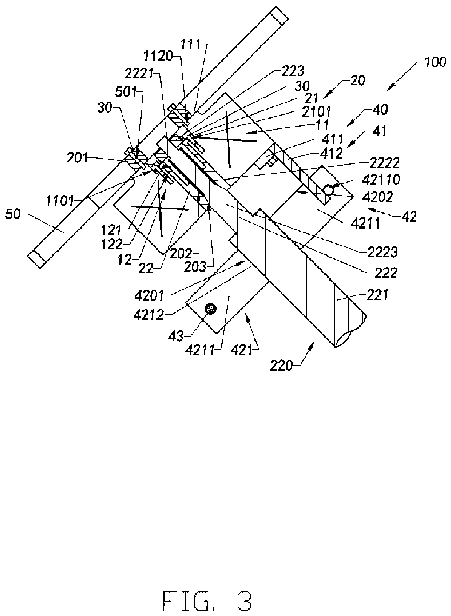

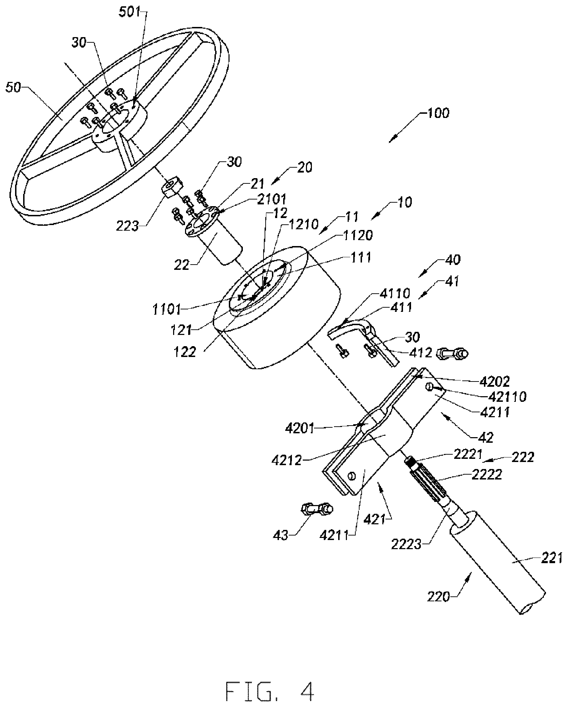

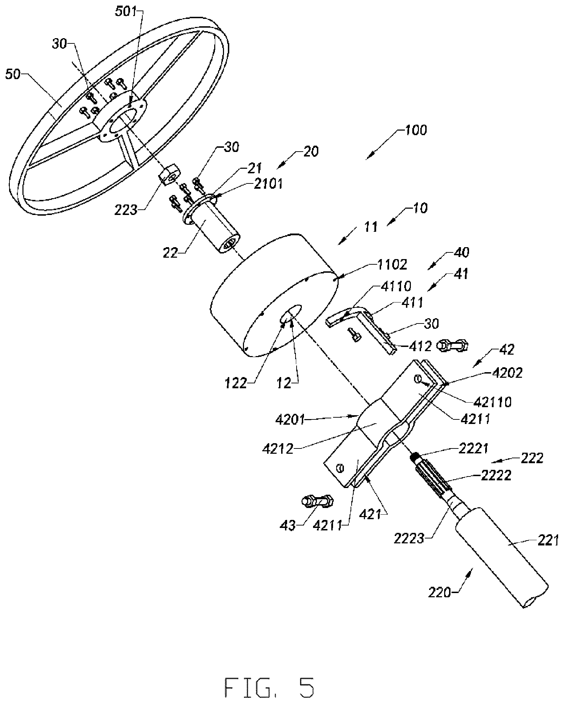

Referring to FIGS. 1 to 6, an automatic driving device 1000 and a direction adjusting device 100 of the automatic driving device 1000 according to an embodiment of the present disclosure are described. The automatic driving device 1000 includes the direction adjusting device 100 and a driving body 200, the direction adjusting device 100 is installed on the driving body 200 and can control the steering of the driving body 200 to change the direction of travel of the driving body 200. The direction adjusting device 100 can adjust the steering of the driving body 200 by executing a steering command from a computer system, so as to realize automatic driving. Furthermore, by simplifying the structure of the direction adjusting device 100, the direction adjusting device 100 has a compact structure and can be quickly installed on the driving body 200, which is conducive to simplifying the assembly process of the direction adjusting device 100 and improving the assembly efficiency.

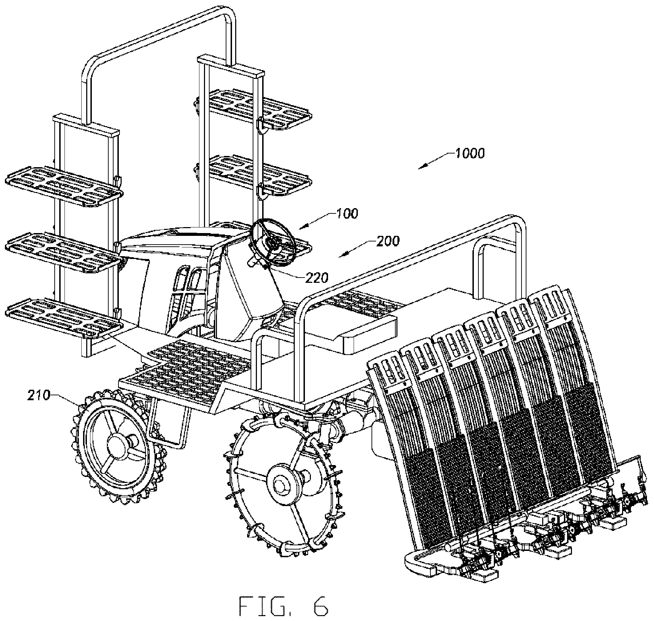

Referring to FIG. 6, the driving body 200 includes a driving main body 210 and a steering system 220, the steering system 220 is installed on the driving main body 210, the direction adjusting device 100 is installed on the steering system 220, and the direction adjusting device can drive the steering system 220 to move to change the direction of travel of the driving main body 210. The specific embodiments of the driving main body 210 are not limited. For example, the driving body 200 can be implemented as a rice transplanter, a fertilizer spreader, a rice transplanter, an engineering transport vehicle, etc. Those skilled in the art should understand that the implementation of the driving body 200 is only an example and should not be limited for the direction adjustment device 100 and the automatic driving device 1000 of the present disclosure.

Referring to FIGS. 1 to 6, the direction adjusting device 100 includes a driving element 10, the driving element 10 is installed on the steering system 220 of the driving body 200. The driving element 10 can receive the steering command from the computer system and output a torsional force when executing the steering command to drive the steering system 220 of the driving body 200 to rotate, thereby driving the driving main body 210 to rotate.

It is worth mentioning that specific embodiments of the computer system are not limited. In a specific embodiment of the present disclosure, the computer system can be implemented as a control computer of the automatic driving device 1000. For example, the control computer of the automatic driving device 1000 can analyze road condition in real time and generate the steering command according to the real-time road condition information, so as to avoid unsafe road sections in time when the driving element 10 executes the steering command. In other embodiments of the disclosure, the computer system can also be implemented as a remote controller, which outputs the steering command. Those skilled in the art should understand that the implementation of the computer system controlling the direction adjustment device 100 and the steering command are only examples and should not be limited for the direction adjusting device 100 and the automatic driving device 1000 of the present disclosure. In addition, the driving element 10 is not limited. Preferably, the driving element 10 is implemented as a steering motor.

Referring to FIGS. 1 to 5, according to one embodiment of the present disclosure, the direction adjusting device 100 further comprises a linkage element 20. The linkage element 20 is connected to the driving element 10 and the steering system 220 of the driving body 200. The driving element 10 can drive the linkage element 20 to rotate, and the steering system 220 rotates with the linkage element 20, thereby changing a direction of travel of the driving body 200.

Specifically, the driving element 10 includes a fitting housing 11 and a driving main body 12. The fitting housing 11 has an accommodation space 1101, the driving main body 12 is installed in the accommodation space 1101 of the fitting housing 11, and the driving body 12 has a fitting platform 121 and a transmission channel 122. The transmission channel 122 of the driving main body 12 communicates with the accommodation space 1101 of the fitting housing 11. A linkage main body 12 is held in the transmission channel 122 by being installed on the assembly platform 121. The driving main body 12 of the driving element 10 can receive the steering command of the computer system and drive the linkage element 20 to rotate when executing the steering command.

More specifically, the linkage element 20 includes a fitting portion 21 and a linkage main body 22 extending from the fitting portion 21. A cross section of the fitting portion 21 is larger than that of the linkage main body 22. Therefore, when the fitting portion 21 is attached to an upper surface of the fitting platform 121, the fitting platform 121 supports the fitting portion 21, and the linkage body 22 is held in the transmission channel 122. The assembly portion 21 further has a plurality of threaded fitting holes 2101, which are distributed around the transmission channel 122. Correspondingly, the fitting platform 121 of the driving main body 12 of the driving element 10 has a plurality of threaded installation holes 1210, which are evenly distributed on the fitting platform 121. The fitting portion 21 of the linkage element 20 is installed on the fitting platform 121 in such a way that the threaded fitting hole 2101 corresponds to the threaded installation hole 1210 of the fitting platform 121.

The direction adjusting device 100 further comprises a connecting element 30, the connecting element 30 is held in the threaded installation hole 1210 of the fitting platform 121 of the driving main body 12 and the threaded fitting hole 2101 of the fitting portion 21 of the linkage element 20. The size of the connecting element 30 matches with the sizes of the threaded fitting holes 2101 and the threaded installation holes 1210. The linkage element 20 is fixedly installed on the driving main body 12 of the driving element 10 through the connecting element 30.

It is worth mentioning that the specific embodiment of the connecting element 30 is not limited. For example, the connecting element is implemented as a fastening screw, a bolt, or other connecting elements known to those skilled in the art, not being not limited to.

Preferably, the threaded installation hole 1210 formed on the fitting platform 121 is implemented as a blind hole, and the threaded fitting hole 2101 formed on the fitting portion 21 of the linkage element 20 is implemented as a countersunk screw through hole, the specific number of the mounting threaded holes 1210 and of the threaded fitting holes 2101 is implemented as six, and the thickness of the fitting platform 121 is about 5mm. The connecting element 30 is implemented as an M4 ^{∗} 12 fastening screw, that is, six fastening screws are installed in the threaded fitting holes 2101 of the fitting portion 21 of the linkage element 20 and the threaded installation hole 1210 of the fitting platform 121 of the driving element 10, and the linkage element 20 is stably held in the transmission channel 122 of the driving main body 12 of the driving element 10. Those skilled in the art should know that the thickness of the fitting platform 121, the implementation of the numbers of the mounting threaded holes 1210 and the fitting threaded holes 2101 are only examples and should not be limited for the direction adjusting device 100 and the automatic driving device 1000 of the present disclosure.

In one embodiment, the fitting platform 121 is formed on the upper part of the driving main body 12, and the linkage element 20 is held in the transmission channel 122 of the drive main body 12 in such a way that the fitting portion 21 is located above the linkage main body 22. The linkage element 20 is supported on the fitting platform 121, which is conducive to avoiding the separation of the linkage element 20 from the driving element 10. Alternatively, the fitting platform 121 is formed at the lower part of the driving main body 12, and the linkage element 20 is held in the transmission channel 122 of the driving main body 12 in such a way that the linkage body 22 is located above the fitting portion 21.

The linkage main body 22 of the linkage element 20 is mounted in the transmission channel 122 of the driving main body 12 of the driving element 10 by a clearance fit. The unilateral radial fit clearance ranges from 0.05 mm to 0.1 mm. It should be understood by those skilled in the art that the implementation of the manner of connection of the transmission body 22 of the linkage element 20 to the drive body 12 is only an example and is not to be limited for the direction adjusting device 100 of the present disclosure.

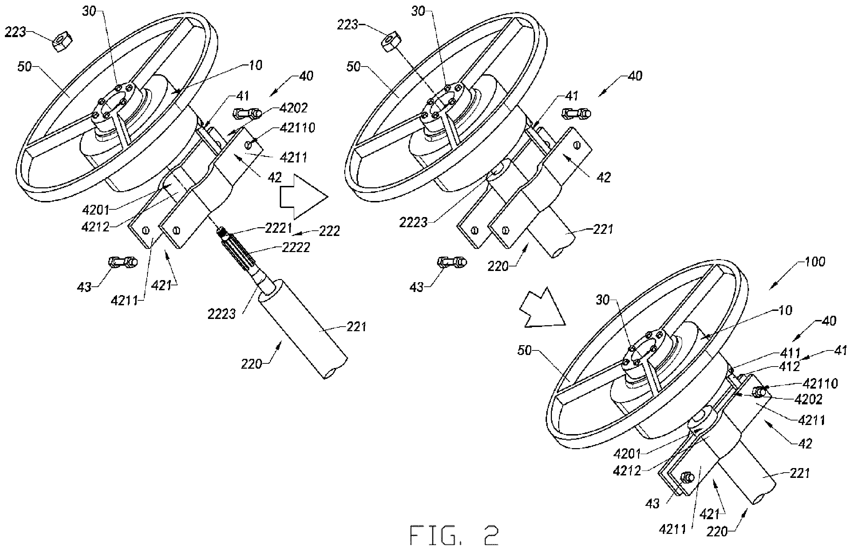

Referring to FIGS. 2 to 5, according to a preferred embodiment of the present disclosure, the steering system 220 of the driving main body 200 is installed on the linkage element 20 of the direction adjusting device 100 by a spline coupling, so as to allow the linkage element 20 to bear a high torque and improve the stability and reliability of the direction adjusting device 100. Specifically, the linkage element 20 has an accommodation chamber 201, a transmission chamber 202 and a positioning chamber 203. The transmission chamber 202 communicates with the accommodation chamber 201 and the positioning chamber 203. The linkage element 20 is provided with an internal spline, and the transmission chamber 202 is formed in the internal spline. The steering system 220 of the driving body 200 is provided with an external spline, the external spline of the steering shaft 222 can cooperate with the internal spline of the linkage element 20, so that the steering shaft 222 is installed on the linkage element 20, as the rotation system 220 is installed on the direction adjusting device 100. The installation process is simple, inexperienced operators can quickly install the direction adjusting device 100 on the steering system 220. Moreover, the internal spline of the linkage element 20 and the external spline of the steering shaft 222 cooperate with each other, which not only plays the role of axial positioning, but also transmits torque, so that the driving element 10 can drive the transmission system 220 and change the direction of travel of the driving main body 210.

Specifically, the steering system 220 of the driving main body 200 includes a steering main body 221 and a steering shaft 222 extending from the steering main body 221. The steering shaft 222 includes a fastening portion 2221, a transmission portion 2222, and a positioning portion 2223. The transmission portion 2222 extends downward from the fastening portion 2221 and is connected to the positioning portion 2223. The transmission portion is provided with the external spline, the steering shaft 222 is installed on the linkage element 20, the fastening portion 2221 of the steering shaft 222 protrudes from the fitting portion 21 of the transmission element 20, the transmission portion 2222 is held in the transmission chamber 202, and the positioning portion 2223 is held in the positioning chamber 203.

Preferably, the inner wall of the positioning chamber 203 formed by the linkage element 20 is tapered, the taper of the inner wall of the linkage element 20 matches with a taper of the outer wall of the positioning portion 2223 of the steering shaft 222. Furthermore, the positioning portion 2223 of the steering shaft 222 is held in the positioning chamber 203 by means of clearance fitting to realize axial positioning.

That is, the linkage element 20 is implemented as a splined sleeve, and the splined sleeve is a non-standard element. Preferably, a total height of the splined sleeve is 75 mm. Preferably, a material of the splined sleeve is implemented as high-strength alloy steel, which has a tensile strength not less than 600MPa, a surface hardness not less than HRC50, and good fatigue resistance.

Furthermore, the steering system 220 includes a locking element 223, the locking element 223 is installed on the fastening portion 2221 of the steering shaft 222 and held above the fitting portion 21 of the linkage element 20 to avoid separation of the steering shaft 222 from the linkage element 20. Preferably, the locking element 223 is mounted on the steering shaft 222 by a threaded connection.

The direction adjusting device 100 further comprises a fitting support 40. Both ends of the fitting support 40 are installed on the fitting housing 11 of the driving element 10 and the steering system 220 of the driving body 200. The fitting support 40 is held between the fitting housing 11 and the steering system 220. When the automatic driving device 1000 is working, the fitting support 40 serves as a fixed support point of the driving element 10 and bears the reaction torque of the driving element 10 during rotation. Moreover, the position of the fitting support 40 installed on the fitting housing 11 of the driving element 10 is selectable, so that different types of the steering shaft 222 can be applied, and the flexibility and adaptability of the direction adjustment device 100 are improved.

The fitting support 40 includes a connecting frame 41 and a fastening assembly 42. The connecting frame 41 is installed at the bottom of the fitting housing 11 of the driving element 10, and the fastening assembly 42 is installed on the connecting frame 41 and the steering main body 221 of the steering system 220, so that the direction adjustment device 100 is firmly installed on the steering system 220.

Specifically, the connecting frame 41 includes a mounting portion 411 and a connecting portion 412 extending downward from the mounting portion 411, the mounting portion 411 is installed at the bottom of the fitting housing 11 of the driving element 10, and the connecting portion 412 is installed on the fastening fitting 42. In the embodiment, a plurality of fitting holes 1102 are arranged at the bottom of the fitting housing 11. Correspondingly, the mounting portion 411 of the connecting frame 41 has at least one connecting hole 4110, and the connecting frame 41 is installed on the fitting housing 11 in such a way that the connecting hole 4110 of the mounting portion 411 corresponds in position to one fitting hole 1102 of the fitting housing 11. The plurality of connecting elements 30 are respectively installed in the connecting holes 4110 of the mounting portion 411 and the fitting holes 1102 of the fitting housing 11, so that the mounting portion 411 of the connecting frame 41 is fixed at the bottom of the fitting housing 11. Preferably, the fitting holes 1102 of the fitting housing 11 are threaded blind holes, the connecting holes 4110 of the connecting frame 411 are threaded through holes, and each connecting element 30 connecting the mounting portion 411 and the fitting housing 11 is an M5 ^{∗} 16 fastening screw.

Preferably, the mounting portion 411 of the connecting frame 41 is arc-shaped, and the connecting portion 412 extends downward from the middle of the mounting portion 411 to form a T-shaped structure. Alternatively, the mounting portion 411 of the connecting frame 41 is strip-shaped. Alternatively, the connecting portion 412 extends downward from one end of the mounting portion 411. Those skilled in the art should know that the implementation of the specific structure of the connecting frame 41 is only an example and is not to be limited for the direction adjusting device 100 of the present disclosure.

The fastening assembly 42 of the connecting frame 41 includes two fasteners 421. Each fastener 421 includes two clamping portions 4211 and a holding portion 4212, the two clamping portions 4211 extend from the holding portion 4212, and the holding portion 4212 is recessed inward from the clamping portion 4211 to form a fitting groove. The holding portions 4212 of the two fasteners 421 are arranged opposite to each other. The fitting grooves of the two fasteners 421 communicate with each other. A fastening space 4201 is formed between the opposite holding portions 4212 to accommodate the steering main body 221 of the steering system 220 of the driving body 200. A clamping space 4202 is formed between the opposite clamping portions 4211 to accommodate the connecting portion 412 of the connecting frame 41.

Furthermore, the clamping portion 4211 of the fastener 421 has a fastening through hole 42110, the connecting frame 41 includes a fastening connector 43, and the fastening through holes 42110 of the two opposite clamping portions 4211 are opposite to each other. The fastening through hole 42110 communicates with the clamping space 4202. The fastening connector 43 is held in the clamping space 4202 and the fastening through holes 42110 of the clamping portions 4211 of the two fasteners 421, so that the holding portions 4212 of the fasteners 421 clamp the steering main body 221 in such a way that the holding portions 4212 are attached to a surface of the steering main body 221 of the steering system 220. At the same time, the clamping portions 4211 of the fasteners 421 clamp the connecting portion 412 in such a way that the clamping portions 4211 are attached to both sides of the connecting portion 412 of the connecting frame 41. Preferably, the fastening connector 43 is a combination of bolt and nut.

In the embodiment, the number of the fitting holes 1102 provided at the bottom of the fitting housing 11 of the driving element 10 is greater than the number of the connecting holes 4110 formed on the mounting portion 411 of the connecting frame 41. In this way, when the connecting holes 4110 of the mounting portion 422 match with the fitting holes 1102 of different fitting housings 11, the connecting frame 41 is held in different positions, so that the installation position of the connecting frame 41 is selectable. For example, in the direction adjustment device 100 according to one embodiment, the mounting portion 411 of the connecting frame 41 has two connecting holes 4110 which are located at the two ends of the mounting portion 411, and five evenly distributed fitting holes 1102 are formed on the fitting housing 11. When the connecting holes 4110 of the mounting portion 411 of the connecting frame 41 correspond in position to different fitting holes 1102, the connecting frame 41 can be installed at different positions at the bottom of the fitting housing 11 to adapt to the steering shaft 222 of the steering system 220 with different extension directions.

Furthermore, the fastening connector 43 is operatively installed on the two fasteners 421, so that a distance between the two fasteners 421 of the fastening assembly 42 is adjustable, and the fastening assembly 42 can be adapted to the steering body 221 of different sizes. In this way, the flexibility of the direction adjusting device 100 is improved. In addition, the fastening connector 43 is movably installed on the two fasteners 42 to allow the fastening assembly 42 to be movably installed on one end of the connecting frame 41, so that a distance between the fastening assembly 42 and the mounting portion 411 of the connecting frame 41 is adjustable. That is, the distance between the fastener 421 of the fastening assembly 42 and the assembly housing 11 of the driving element 10 is adjustable to bear the reaction torque of different steering systems 220, which is conducive to improving the applicability of the direction adjusting device 100.

The direction adjusting device 100 further includes an operating element 50. The operating element 50 is installed at the end of the fitting housing 11 of the driving element 10. By operating the operating element 50, the steering system 220 of the driving body 200 can be driven to rotate, thereby allowing the direction of travel of the driving body 210 to be manually changed.

Specifically, the fitting housing 11 has a fitting bulge 111 and a plurality of limiting holes 1103 formed on the fitting bulge 111, the operating element 50 has a plurality of fixing holes 501, and the operating element 50 is installed on the fitting housing 11 of the driving element 10 in such a way that the fixing holes 501 correspond in position to the limiting holes 1103. The connecting elements 30 are installed in the fixing holes 501 of the operating element 50 and the limiting holes 1103 of the fitting housing 11, so that the operating element 50 is fixed to the fitting housing 11. Preferably, the limiting holes 1103 of the fitting bulge 111 are threaded blind holes, the fixing holes 501 of the operating element 50 are threaded through holes, and the connecting element 30 connecting the fitting bulge 111 and the operating element 50 is a fastening screw.

In a preferred embodiment of the present disclosure, the direction adjusting device 100 further includes a dust cover, which is installed on the operating element 50. The dust cover covers the fitting housing 11 of the driving element to seal the accommodation space 1101, thereby preventing dust and impurities from entering the accommodation space 1101 of the assembly housing 11 and the transmission channel 1210 communicating with the accommodation space 1102, which is conducive to ensuring the stability and reliability of the direction adjusting device 100.

According to another aspect of the present disclosure, the present disclosure further provides an assembly method of the direction adjusting device 100. The assembly method comprises the following steps:
(a) holding the linkage element 20 in the transmission channel 120 of the driving main body 12 of the driving element 10, where the driving element 10 can drive the linkage element 20 to rotate;
(b) installing the mounting portion 411 of the connecting frame 41 of the fitting support 40 on the fitting housing 11 of the driving element 10; and
(c) clamping the extension portion 412 of the connecting frame 41 in the clamping space 4202 of the fastening assembly 42.

Preferably, in step (a), the linkage element 20 is installed on the fitting platform 121 in such a way that the threaded fitting hole 2101 of the fitting portion 21 corresponds in position to the threaded installation hole 1210 of the fitting platform 121 of the driving main body 12. The connecting element 30 is installed in the threaded fitting hole 2101 of the connecting element 20 and the threaded installation hole 1210 of the fitting platform 121, so that the connecting element 20 is stably connected to the fitting platform 121. In a preferred embodiment of the present disclosure, the linkage element 20 is installed on the fitting platform 121 in such a way that the fitting portion 21 is located above the rotating main body 22, and the fitting platform 121 supports the linkage element 20, thereby avoiding separation of the linkage element 20 from the driving element 10. Alternatively, the linkage element 20 is mounted on the fitting platform 121 to locate the rotating main body 22 above the fitting portion 21.

Preferably, the linkage main body 22 of the linkage element 20 is held in the transmission channel 120 of the driving main body 12 of the driving element 10 by a clearance fit.

Furthermore, the operating element 50 is installed on the fitting housing 11 of the driving element 10, so that the direction adjusting device 100 allows the rotation direction and rotation angle to be controlled by manual operation. Specifically, the fixing hole 501 of the operating element 50 is positioned to correspond to the limiting hole 1103 of the fitting housing 11, and the connecting element 30 is installed in the fixing hole 501 and the limit hole 1103, so that the operating element 50 is fixed to the driving element 10.

The above method further comprises the steps of installing the linkage element 20 of the direction adjusting device 100 on the steering shaft 222 of the steering system 220 of the driving main body 200. Specifically, the transmission portion 2222 of the steering shaft 222 and the linkage element 20 are held in the transmission chamber 202 of the linkage element 20 by spline fit, and the positioning portion 2223 of the steering shaft 222 is held in the positioning chamber 203 of the linkage element 20 by a clearance fit.

In the above method, the steering shaft 222 is installed on the linkage element 20 in such a way that an end of the steering shaft protrudes from an end of the linkage element 20, and the locking element 223 is installed on the end of the steering shaft 222, thereby ensuring the stable connection between the steering shaft 222 and the linkage element 20.

Furthermore, the rotating main body 221 of the rotating system 220 is clamped by the two fasteners 421 of the fastening assembly 42. Specifically, the fastening connector 43 is installed in the fastening through holes 42110 of the two opposite fasteners 421, so that the holding portion 422 of the fastener 421 is attached to the rotating main body 221 to firmly clamp the rotating body 221. In this way, the direction adjusting device 100 is stably installed on the steering system 220 of the driving main body 200.

Those skilled in the art can understand that the above embodiments are only examples, in which the features of different embodiments can be combined with each other to obtain implementations that are easily conceivable according to the disclosure of the present disclosure but may not be clearly indicated in the drawings.

Those skilled in the art should understand that the above description and the embodiments of the present disclosure shown in the drawings are only examples and do not limit the present disclosure. The purpose of the present disclosure has been completely and effectively achieved. The functions and structural principles of the present disclosure have been shown and explained in the embodiments. Without departing from the principles, the implementation of the present disclosure may have any deformation or modification.

## Claims

1. A direction adjusting device for mounting to a steering system of a driving body, the direction adjusting device comprising:
a driving element, wherein the driving clement comprises a fitting housing and a driving main body, the fitting housing has an accommodation space, the driving main body has a transmission channel, the driving main body is installed in the accommodation space of the fitting housing, and the transmission channel of the driving main body communicates with the accommodation space of the fitting housing; and
a linkage element, wherein the linkage element is installed in the transmission channel of the driving main body, the driving main body is capable of driving the linkage element to rotate, and the linkage element is installed on the steering system of the driving body.

2. The direction adjusting device of claim 1, wherein the linkage element has a transmission chamber and an internal spline, and the transmission chamber is formed in the internal spline.

3. The direction adjusting device of claim 2, wherein the linkage element has a positioning chamber which communicates with the transmission chamber, and an inner wall of the positioning chamber formed by the linkage element is tapered.

4. The direction adjusting device of claim 3, wherein the linkage element is installed in the transmission channel of the driving main body by a clearance fit.

5. The direction adjusting device of claim 3, wherein the driving main body has a fitting platform, the linkage element comprises a fitting portion and a transmission main body extending from the fitting portion, and the transmission main body of the linkage element is held in the transmission channel of the driving main body in such a way that the fitting portion is installed on the fitting platform of the driving main body.

6. The direction adjusting device of claim 5, wherein the linkage element is a non-standard splined sleeve.

7. The direction adjusting device of claim 1, further comprising a fitting bracket, wherein the fitting bracket comprises a connecting frame and a fastening assembly, and the fitting bracket is held between the fitting housing of the driving element and the fastening assembly.

8. The direction adjusting device of claim 7, wherein the connecting frame comprises a mounting portion and an extension portion, the extension portion extends downward from the mounting portion, the mounting portion is installed on the fitting housing, and the extension portion is clamped to the fastening assembly.

9. The direction adjusting device of claim 8, further comprising a plurality of connecting elements, wherein a bottom of the fitting housing is provided with a plurality of fitting holes, the connecting frame is provided with at least one connecting hole, the at least one connecting hole is allowed to selectively correspond to at least one of the plurality of fitting holes, each of the plurality of connecting element is installed in one of the plurality of fitting holes and one connecting hole.

10. The direction adjusting device of claim 9, wherein the extension portion extends downward from a middle of the mounting portion to form a T shaped structure.

11. The direction adjusting device of claim 9, wherein the fastening assembly comprises two fasteners and a fastening connector, the two fasteners are opposite to each other, the fastening connector is installed between the two fasteners to form a fastening space and a clamping space between the two fasteners, and the extension portion of the connecting frame is held in the clamping space, the steering system is held in the fastening space, the fastening assembly is configured to bear a reverse torque of the driving main body while working.

12. The direction adjusting device of claim 11, wherein the fastening connector is movably installed on the two fasteners, and distances between the two fasteners and the fitting housing are adjustable.

13. The direction adjusting device of claim 12, further comprising an operating element, wherein the operating element is installed at an end of the fitting housing.

14. An automatic driving device comprising:
the direction adjusting device of any one of claims 1 to 13; and
the driving body, wherein the driving body comprises a driving main body and the steering system, the steering system is installed on the driving main body and is capable of controlling a direction of travel of the driving main body.

15. The automatic driving device of claim 14, wherein the steering system comprises a steering main body and a steering shaft extending from the steering main body, the steering shaft is provided with an external spline, and the external spline matches with an internal spline of the linkage element of the direction adjusting device.

16. The automatic driving device of claim 15, further comprising a locking element, wherein the steering shaft is installed on the linkage element in such a way that an end of the steering shaft protrudes from an end of the linkage element, and the locking element is installed on the end of the steering shaft.

17. An assembly method of a direction adjusting device, comprising:
holding a linkage element in a transmission channel of a driving main body of a driving element, wherein the driving main body is capable of driving the linkage element to rotate;
mounting a connecting frame of a fitting bracket onto a fitting housing of the driving element; and
connecting an extension portion of the connecting frame into a clamping space of a fastening assembly.

18. The assembly method of claim 17, wherein a plurality of threaded fitting holes of a fitting portion of the linkage element corresponds in position to a plurality of threaded installation holes of a fitting platform of the driving main body, and a connecting element is installed in one of plurality of threaded fitting holes of the linkage element and one of the plurality of threaded installation holes of the fitting platform.

19. The assembly method of claim 18, wherein a linkage main body of the linkage element is held in the transmission channel of the driving main body by a clearance fit.

20. The assembly method of claim 19, wherein the linkage element is installed on the fitting platform of the driving main body in such a way that the fitting portion is located above the linkage main body.

21. The assembly method of claim 20, wherein an operating element is installed on the fitting housing of the driving element.

22. The assembly method of any one of claims 17 to 21, further comprising installing the linkage element on a steering shaft of a steering system of the driving main body before connecting an extension portion of the connecting frame into a clamping space of a fastening assembly.

23. The assembly method of claim 22, wherein a transmission portion of the steering shaft and the linkage element are held in a transmission chamber of the linkage element by a spline coupling.

24. The assembly method of claim 23, wherein a positioning portion of the steering shaft is held in a positioning chamber of the linkage element by a clearance fit.
